Europäisches Patentamt

European Patent Office

Office européen des brevets

(11) Veröffentlichungsnummer: **0 146 850**
**B1**

# EUROPÄISCHE PATENTSCHRIFT

(45) Veröffentlichungstag der Patentschrift: **12.09.90**

(51) Int. Cl.⁵: **G 01 C 19/28,** G 01 C 19/30

(21) Anmeldenummer: **84114858.8**

(22) Anmeldetag: **06.12.84**

(54) Drehmomenterzeuger für Kreisel.

(30) Priorität: **21.12.83 DE 3346185**

(43) Veröffentlichungstag der Anmeldung:
**03.07.85 Patentblatt 85/27**

(45) Bekanntmachung des Hinweises auf die
Patenterteilung:
**12.09.90 Patentblatt 90/37**

(84) Benannte Vertragsstaaten:
**DE FR GB**

(56) Entgegenhaltungen:
**DE-A-2 818 105**
**US-A-3 475 971**
**US-A-4 296 639**

(73) Patentinhaber: **Bodenseewerk Gerätetechnik
GmbH
Alte Nussdorfer Strasse 15 Postfach 1120
D-7770 Überlingen/Bodensee (DE)**

(72) Erfinder: **Kempas, Hagen
Kreuzstrasse 25A
D-7770 Überlingen 12 (DE)**

(74) Vertreter: **Weisse, Jürgen, Dipl.-Phys. et al
Patentanwälte Dipl.-Phys. Jürgen Weisse Dipl.-
Chem. Dr. Rudolf Wolgast Bökenbusch 41
Postfach 11 03 86
D-5620 Velbert 11 Langenberg (DE)**

Courier Press, Leamington Spa, England.

**Beschreibung**

Die Erfindung betrifft einen Drehmomenterzeuger zur Ausübung eines Drehmoments auf einen um eine Drallachse umlaufenden Kreiselrotor mittels stromdurchflossener Spulen, bei welchem

(a) die Spulen ferromagnetische Kerne aufweisen, im wesentlichen axial in bezug auf die Drallachse ausgerichtet und vor einer zur Drallachse im wesentlichen senkrechten, ferromagnetischen Fläche des Kreiselrotors angeordnet sind.

Es sind elektrisch gefesselte, auf Drehgeschwindigkeit ansprechende Kreisel bekannt mit einem um eine Drallachse angetriebenen Kreiselrotor, der mechanisch um zwei zu seiner Drallachse und zueinander senkrechte Achsen frei beweglich in einem Gehäuse gelagert ist. Bei einem trockenen, abgestimmten Kreisel ist in einem Gehäuse ein elektrischer Antriebsmotor angeordnet, dessen Läufer in Lagern im Gehäuse gelagert ist. Mit dem Läufer ist der Kreiselrotor über ein mitrotierendes Kardangelenk verbunden. Die Gelenkachsen des Kardangelenkes sind dabei als Drehfedern ausgebildet. Die Dralachse des Kreiselrotors sucht ihre Lage im inertialen Raum beizubehalten. Bei einer Auslenkung des Gehäuses gegenüber dieser Drallachse entstehen an den Drehfedern Federmomente. Bei einem trockenen, abgestimmten Kreisel ist dafür gesorgt, dass die Federmomente durch dynamische Momente vollständig kompensiert werden. Dadurch ist der Kreiselrotor bei kleinen Auslenkwinkeln praktisch momentenfrei gelagert. Es sind Abgriffe vorgesehen, die auf die Auslenkungen des Kreiselrotors aus einer Mittellage um eine erste bzw. um eine zweite, zu der ersten und zu der Drallachse senkrechte Eingangsachse ansprechen. Weiterhin sind auf den Eingangsachsen Drehmomenterzeuger mit Spulen angeordnet. Die Drehmomenterzeuger sind von den Abgriffsignalen gesteuert, und zwar so, dass der auf die Auslenkungen um die eine Eingangsachse ansprechende Abgriff auf den um die andere Eingangsachse wirksamen Drehmomenterzeuger geschaltet ist und umgekehrt. Es wird so auf den Kreiselrotor jeweils ein der Auslenkung entgegenwirkendes Drehmoment erzeugt. Dieses Drehmoment, das erforderlich ist, um den Kreiselrotor relativ zum Gehäuse in seiner Mittellage zu halten, ist proportional der inertialen Drehgeschwindigkeit des Gehäuses um die betreffende Eingangsachse.

Bei bekannten Kreiseln dieser Art (US-PS 3 438 270) enthält der Kreiselrotor einen magnetischen Ring, der mit Paaren von gehäusefest im Luftspalt angeordneten eisenlosen Spulen zur Erzeugung des Drehmoments zusammenwirkt. Der in den Spulen fliessende Strom ist dann unmittelbar ein Mass für das auf den Kreiselrotor ausgeübte Drehmoment. Damit diese Proportionalität und Hysteresefreiheit gewährleistet ist, müssen eisenlose Spulen benutzt werden. Solche erfordern jedoch relativ hohe Stromstärken, um das erforderliche Drehmoment zu erzeugen. Durch den ohmschen Widerstand der Spulen ergibt sich dabei eine entsprechend hohe Verlustleistung.

Diese bringt eine unerwünschte Erwärmung des Kreisels mit sich, die dessen Funktion beeinträchtigen kann. Das erhaltene, drehmomentproportionale Signal ist ein analoges Signal.

Bei digitaler Signalverarbeitung muss dieses analoge Signal durch einen Analog-Digital-Wandler in ein digitales Signal umgesetzt werden.

Die GB-B-2 040 450 zeigt einen elektrisch gefesselten, zweiachsigen Wendekreisel mit einer ersten und einer zweiten Eingangsachse, die zueinander und zur Drallachse senkrecht verlaufen. Ein erster Abgriff und ein erster Drehmomentenerzeuger sind auf der ersten Eingangsachse angeordnet, und ein zweiter Abgriff und ein zweiter Drehmomenterzeuger sind auf der zweiten Eingangsachse angeordnet. Das Signal von dem ersten Abgriff ist über ein Netzwerk mit geeignetem Zeitverhalten und über Verstärkermittel auf den zweiten Drehmomenterzeuger geschaltet. Das Signal von dem zweiten Abgriff ist in ähnlicher Weise auf den ersten Drehmomenterzeuger geschaltet. Bei dieser Konstruktion ist der Kreisel kardanisch gelagert und die Abgriffe und Drehmomenterzeuger haben Statoren und Rotoren, die mit den verschiedenen Kardanrahmen verbunden sind.

Durch die US-A-4 296 639 ist ein dynamisch abgestimmter Kreisel mit Abgriffen und Drehmomenterzeugern bekannt, bei welchem ein ferromagnetischer Rotor eine Radialfläche aufweist, der die Spulen der Drehmomenterzeuger mit Weicheisenkern gegenüberliegen.

Auch die US-A-3 475 971 zeigt Drehmomenterzeuger mit axialen Wicklungen und Kernen aus Stahl oder laminiertem Eisen. Diese Drehmomenterzeuger wirken mit einem magnetisierbaren Ring am Rotor zusammen, der mit einer Radialebene den Wicklungen des Drehmomenterzeugers gegenüberliegt.

In keinem der beiden letztgenannten Dokumente ist die Frage des linearen Zusammenhanges zwischen Strom im Drehmomenterzeuger und erzeugtem Drehmoment angesprochen.

Schliesslich zeigt die DE-A-28 18 105 einen dynamisch abgestimmten Kreisel, bei welchem die Drehmomenterzeuger axiale Wicklungen mit Kern sind, die einer Radialfläche eines ferromagnetischen Kranzes am Rotor gegenüberliegen und eine parallel zur Antriebswelle verlaufende Anziehungskraft hervorrufen. Durch einen vom Neigungswinkel des Rotors abhängigen Korrekturausdruck soll erreicht werden, dass die Anziehungskraft ungeachtet der Änderungen des Luftspaltes konstant bleibt. Das setzt eine Messung des sehr kleinen Neigungswinkels des Rotors und die sehr genaue Bildung einer nichtlinearen Korrekturfunktion voraus.

Der Erfindung liegt die Aufgabe zugrunde, bei Verwendung von Drehmomenterzeugern mit Kernen aus magnetisierbarem Material in messtechnisch einfach zu realisierender Weise Ausgangssignale zu gewinnen, welche den erzeugten Drehmomenten proportional sind.

Erfindungsgemäss wird diese Aufgabe dadurch gelöst, dass

die Spulen auf kraftmessenden Gebern abgestützt sind, die von den auf die Spulen wirkenden Reaktionskräften beaufschlagt sind und aus deren Signalen ein dem wirksamen Drehmoment proportionales Drehmomentsignal erzeugbar ist.

Durch die Verwendung von axial ausgerichteten Spulen mit ferromagnetischen Kernen können die erforderlichen Drehmomente mit wesentlich geringeren Strömen erzeugt werden als sie bei eisenlosen Spulen in der bekannten Anordnung erforderlich sind. Allerdings besteht keine genaue Proportionalität zwischen Strom und Drehmoment. Es tritt auch eine Hysterese auf. Aus diesem Grund wird das Drehmoment aus den an den Spulen wirksamen Reaktionskräften mittels kraftmessender Geber bestimmt.

Ausgestaltungen der Erfindung sind Gegenstand der abhängigen Ansprüche 2 bis 4.

Ein mit solchen Drehmomenterzeugern aufgebauter Kreisel ist Gegenstand des Patentanspruchs 5.

Ausgestaltungen dieses Kreisels sind Gegenstand der abhängigen Asprüche 6 bis 9.

Ein Ausführungsbeispiel der Erfindung ist nachstehend unter Bezugnahme auf die zugehörigen Zeichnungen näher erläutert:

Fig. 1 zeigt eine Hälfte eines Längsschnitts eines Kreisels mit einem Drehmomenterzeuger. Die andere Hälfte des Längsschnitts ist symmetrisch dazu.

Fig. 2 zeigt schematisch die Anordnung von Abgriff- und Drehmomenterzeugerspulen im Gehäuse um die Drallachse des Kreisels herum.

Fig. 3 zeigt die Schaltung der Abgriffspulen.

Fig. 4 zeigt die Aufschaltung der Abgriffsignale auf die Drehmomenterzeugerspulen.

Fig. 5 ist ein Blockschaltbild und zeigt die Schaltung der auf die Reaktionskräfte der Drehmomenterzeugerspulen ansprechenden Geber, und

Fig. 6 zeigt ein Beispiel eines bei der Schaltung von Fig. 5 verwendbaren Oszillators.

Der Kreisel weist ein Gehäuse 10 auf. Dieses Gehäuse 10 besteht aus einem Oberteil 12 grösseren Durchmessers und einem Unterteil 14 kleineren Durchmessers. In dem Gehäuse 10 ist eine Lagerhülse 16 mittels einer ringförmigen Zwischenwand 18 gehalten. Die Zwischenwand 18 bildet den in der Figur unteren Abschluss des Oberteils 12. Die Lagerhülse 16 erstreckt sich teils in den Oberteil 12 und teils in den Unterteil 14. In dem Unterteil 14 sitzt ein als Synchron-Hysteresemotor ausgebildeter elektrischer Antriebsmotor 20. Der Antriebsmotor 20 weist einen im Unterteil 14 sitzenden Ständer 22 und einen Läufer 24 auf. Der Läufer 24 ist über Lager 26 und 28 in der Lagerhülse 16 gelagert. Er weist einen radialen Teil 30 und einen sich daran anschliessenden zylindrischen Teil 32 auf, die um das in der Figur untere Ende der Lagerhülse 16 herumgreifen, so dass der zylindrische Teil 32 sich zwischen den Ständer 22 und das in der Figur untere Ende der Lagerhülse 16 erstreckt. Der Läufer 24 wird so um eine gehäusefeste Achse 34 angetrieben.

Ein Kreiselrotor 36 aus ferromagnetischem Material ist über ein Kardangelenk 38 mit dem Läufer 24 verbunden. Dabei ist das Kardangelenk 38 wie oben beschrieben mit Drehfedern ausgebaut und so abgestimmt, dass der Kreiselrotor 36 um zwei zueinander senkrechte Achsen für kleine Auslenkwinkel frei beweglich ist. Der Aufbau eines solchen Kardangelenks ist an sich bekannt und daher hier nicht im einzelnen beschrieben. Das Kardangelenk 38 kann beispielsweise nach Art des in der DE-OS 32 13 720 beschriebenen Gelenks ausgebildet sein.

Der Kreiselrotor 36 weist eine zu seiner Drallachse senkrechte Fläche 40 auf, wobei diese Fläche von einem ferromagnetischen Material gebildet ist. Ein Drehmomenterzeuger 42 zur Ausübung eines Drehmoments auf den Kreiselrotor 36 um eine zur Papierebene der Figur senkrechte erste Eingangsachse enthält zwei um 180° um die Drallachse winkelversetzte Spulen 44 mit ferromagnetischem, vormagnetisiertem Kern 46, von denen in der Figur nur eine dargestellt ist. Ein weiteres Paar von solchen Spulen ist um 90° zu dem in der Figur dargestellten Schnitt versetzt angeordnet. Die Spulen 44 jedes Paares sind von einem Gleichstromsignal gegensinnig ansteuerbar. Sie üben dadurch auf die Fläche 40 und den Kreiselrotor 36 ein Drehmoment aus. Durch den ferromagnetischen Kern 46 ist dazu nur ein relativ geringer Spulenstrom erforderlich.

Die Spulen 44 mit den ferromagnetischen Kernen 46 sind auf kraftmessenden Gebern 48 abgestützt. Wenn die Spule 44 eine Kraft auf den Kreiselrotor 36 ausübt, dann wirkt eine dieser Kraft entgegengesetzte gleiche Reaktionskraft auf den kraftmessenden Geber 48. Aus den Signalen der Geber 48 wird ein dem ausgeübten Drehmoment proportionales Drehmomentsignal erzeugt.

Die kraftmessenden Geber 48 enthalten piezoelektrische Elemente, wie Schwingquarze, die von den Reaktionskräften beaufschlagt und in einer Oszillatorschaltung angeordnet sind, die als das besagte Drehmomentsignal eine dem wirksamen Drehmoment analoge, z.B. proportionale Frequenz liefert. Das so gewonnene Signal kann leicht in ein Digitalsignal zur digitalen Weiterverarbeitung umgesetzt werden, im Gegensatz zu dem analogen Spulenstrom des Standes der Technik.

Die Spulen 44 sind von einem Abgriffsignal beaufschlagt, welches von der Auslenkung des Kreiselrotors 36 aus einer Mittellage relativ zu dem Gehäuse 10 abhängt, derart, dass durch den Drehmomenterzeuger 42 ein der Auslenkung entgegenwirkendes Drehmoment auf den Kreiselrotor 36 ausübbar ist. Dabei dienen die Spulen 44 des Drehmomenterzeugers 42 gleichzeitig als Teile des Abgriffs. Die Spulen 44 sind gleichzeitig von einer Wechselspannung beaufschlagt und so zusammengeschaltet, dass an der Schaltung ein von der Auslenkung des Kreiselrotors abhängiges, resultierendes Abgriffsignal abgreifbar ist. Bei einer Abweichung der Drallachse des Kreiselrotors 36 von der gehäusefesten Achse 34 z.B. in der Papierebene der Figur nähert sich die Fläche 40 des Kreiselrotors 36 auf der dargestellten rechten Seite dem Kern 46 und der Spule 44, wodurch deren Induktivität gegenüber dem Normalwert erhöht wird. Auf der (nicht dargestellten) gegenüberliegenden Seite entfernt sich die Fläche 40 von der dort sitzenden Spule, wodurch die Induktivität dieser Spule verringert wird. Durch geeignetes Zusammenschalten der Spulen jedes Paares können Abgriffsignale gewonnen werden, die der Auslenkung des Kreiselrotors 36 aus der Mittellage analog sind. Diese Abgriffsignale steuern wiederum Gleichstromsignale, die auf einen Drehmomenterzeuger gegeben werden. Wegen der Kreiselmechanik wird jeweils das an einem Paar von gegenüberliegenden Spulen abgegriffene Wechselstromsignal in ein Gleichstromsignal umgewandelt und auf das um 90° zu diesen Spulen winkelversetzte Paar von diametral gegenüberliegenden Spulen aufgeschaltet.

Die kraftmessenden Geber 48 liefern dann Drehmomentsignale, die den inertialen Winkelgeschwindigkeiten des Gehäuses 10 um die beiden Eingangsachsen proportional sind. Diese Drehmomentsignale liegen in Form einer Frequenz vor und können dadurch leicht digital verarbeitet werden.

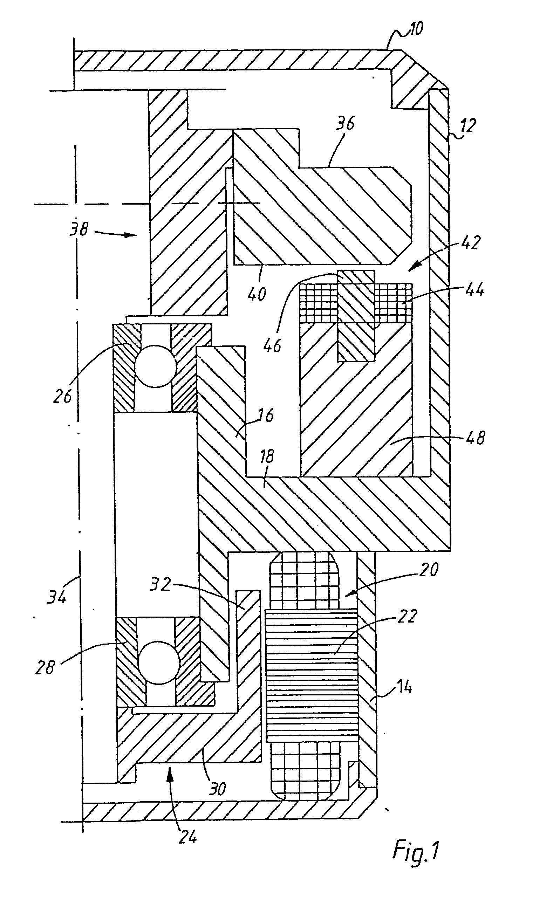

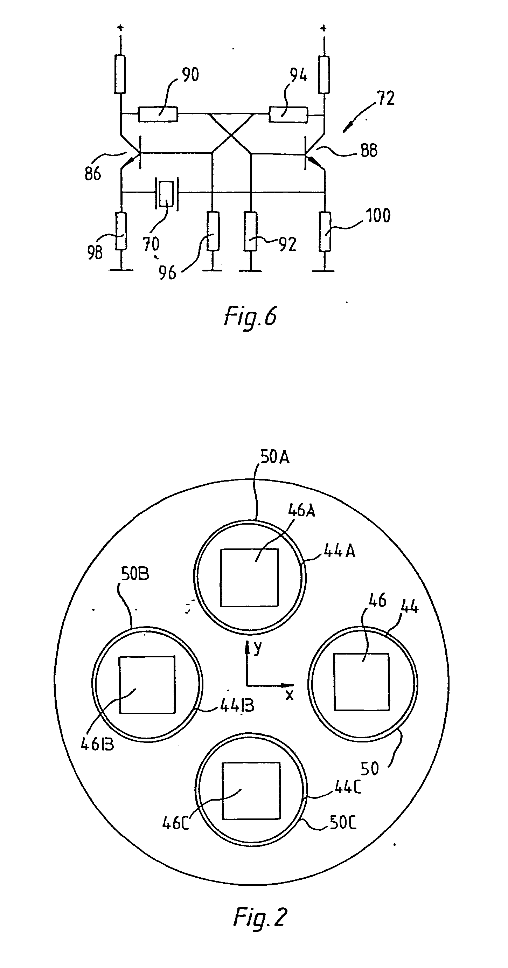

Es können natürlich auch für die Abgriffe einerseits und für die Drehmomenterzeuger andererseits getrennte Spulen vorgesehen werden. Eine solche Anordnung ist nachstehend unter Bezugnahme auf Fig. 2 bis 6 im einzelnen beschrieben. Der Aufbau des Kreisels entspricht dabei dem von Fig. 1.

Auf vier um jeweils 90° gegeneinander winkelversetzten Kernen 46, 46A, 46B und 46C sitzen Drehmomenterzeugerspulen 44, 44A, 44B bzw. 44C sowie zusätzliche Abgriffspulen 50, 50A, 50B bzw. 50C. Die Kerne 46 und 46B mit den Drehmomenterzeugerspulen 44 bzw. 44B und den Abgriffspulen 50 bzw. 50B sind auf der gehäusefesten x-Achse angeordnet. Die Kerne 46A und 46C mit den Drehmomenterzeugerspulen 44A bzw. 44C und den Abgriffspulen 50A bzw. 50C sind auf der zu der x-Achse senkrechten y-Achse angeordnet.

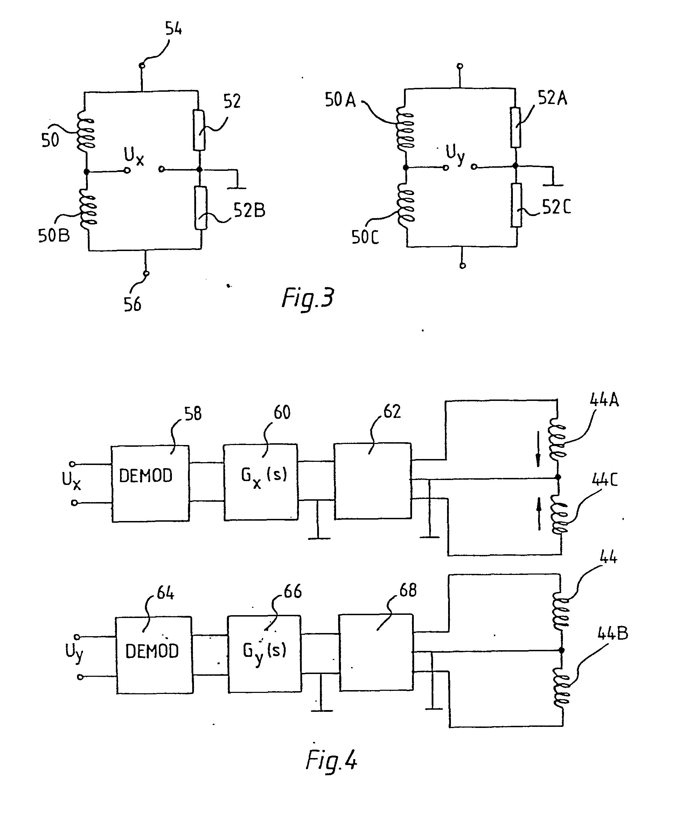

Wie aus Fig. 3 ersichtlich ist, sind die Abgriffspulen 50 und 50B mit zwei Widerständen 52, 52B in einer Brückenschaltung angeordnet, die über Klemmen 54 und 56 von einer Wechselspannung gespeist sind. Der Punkt zwischen den Widerständen 52 und 52B ist geerdet. Eine Abgriffspannung $U_x$ wird in der Brückendiagonale abgenommen. Bei einer Auslenkung des Kreiselrotors 36 mit der ferromagnetischen Fläche 40 um die y-Achse, nähert sich die Fläche 40 der einen Abgriffspule, während sie sich von der anderen Abgriffspule entfernt. Dadurch werden die Induktivitäten der beiden Abgriffspulen 50 und 50B gegensinnig verändert. Dadurch tritt als Abgriffspannung $U_x$ eine Wechselspannung auf, die je nach der Richtung der Auslenkung des Kreiselrotors 36 gleich oder gegenphasig zu der an der Brückenschaltung anliegenden Wechselspannung ist. In entsprechender Weise sind die Abgriffspulen 50A und 50C mit Widerständen 52A und 52C in einer Brückenschaltung angeordnet, welche eine Abgriffspannung $U_y$ nach Maßgabe der Auslenkung des Kreiselrotors 36 um die x-Achse liefert.

Wie aus Fig. 4 ersichtlich ist, wird die Abgriffspannung $U_x$ mittels eines Demodulators 58 demoduliert. Der Demodulator 58 liefert eine Gleichspannung, deren Betrag von der Amplitude der an der Brückendiagonale abgegriffenen Abgriffspannung und deren Vorzeichen davon abhängt, ob diese Abgriffspannung gleich- oder gegenphasig zu der an die Brückenschaltung speisenden Wechselspannung ist. Die so erhaltene Gleichspannung ist auf ein Netzwerk 60 aufgeschaltet, durch das in bekannter Weise ein regelungstechnisch günstiges Zeitverhalten erzielt wird. Das so erhaltene Signal ist über eine Leistungsverstärkerschaltung so auf die beiden Drehmomenterzeugerspulen 44A und 44C geschaltet, daß in den Spulen 44A und 44C durch dieses Signal entgegengesetzt gerichtete Magnetfelder erzeugt werden, wie in Fig. 4 durch die Pfeile dargestellt ist. Diese entgegengesetzt gerichteten Magnetfelder sind Vormagnetisierungen überlagert, die für beide Drehmomenterzeugerspulen gleich sind. Es wird daher die Kraftflußdichte in der einen Drehmomenterzeugerspule erhöht und in der anderen Drehmomenterzeugerspule entsprechend vermindert. Auf den Kreiselrotor 36 wird daher ein resultierendes Drehmoment um die x-Achse ausgeübt. Es stellt sich ein Drehmoment um die x-Achse ein, welches der von den Abgriffspulen 50, 50B erfaßten Auslenkung des Kreiselrotors 36 um die y-Achse entgegenwirkt. Entsprechend wird bei einer Auslenkung des Kreiselrotors 36 um die x-Achse das durch die Brückenschaltung mit den Abgriffspulen 50A und 50C erzeugte Abgriffsignal $U_y$ über einen Demodulator 64 und ein Netzwerk 66 sowie eine Leistungsverstärkerschaltung 68 auf die Drehmomenterzeugerspulen 44 und 44B gegeben, so daß ein der Auslenkung entgegenwirkendes Drehmoment um die y-Achse auf den Kreiselrotor 36 ausgeübt wird. Der Kreiselrotor 36 ist so elektrisch an die Mittellage gefesselt. Die in den Drehmomenterzeugerspulen 44, 44B bzw. 44A, 44C fließenden Ströme sind jedoch wegen der Kerne 46 usw. hier nicht proportional zu den erzeugten Drehmomenten. Diese Drehmomente werden durch Geber 48 aus den Reaktionskräften direkt gemessen.

Die Vormagnetisierung der Kerne kann bei Kernen aus Weicheisen dadurch erreicht werden, daß ein konstanter Strom zusätzlich durch die Drehmomenterzeugerspulen geleitet wird, dem die von den Abgriffsignalen erzeugten Ströme additiv oder subtraktiv überlagert sind.

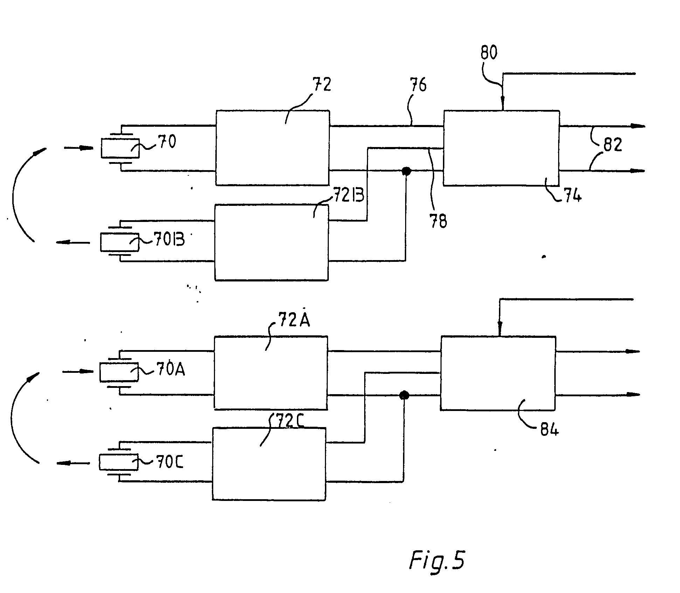

Die Geberanordnung ist in Fig. 5 dargestellt.

Unter jeder Drehmomenterzeugerspule 44, 44A, 44B, 44C sitzt ein Kristallsensor 70, 70A, 70B bzw. 70C, z.B. in Form eines Schwingquarzes, der in einer Oszillatorschaltung 72, 72A, 72B bzw. 72C angordnet ist. Die Schwingungsfrequenz der Oszillatorschaltungen wird durch die Frequenz des Kristallsensors 70, 70A, 70B oder 70C bestimmt. Diese Frequenz ändert sich mit einer Druckbelastung des Kristallsensors.

Ein Drehmoment um die y-Achse belastet den einen auf der x-Achse angeordneten Geber mit z.B. dem Kristallsensor 70 und entlastet den anderen Geber mit dem Kristallsensor 70B. Infolgedessen wird die Frequenz des Oszillators 72 in dem einen Sinne und die Frequenz des Oszillators 72B in dem anderen, entgegengesetzten Sinne verändert. Die Ausgangssignale der beiden Oszillatoren 72 und 72B werden auf einen auf- und abwärtszählenden Zähler 74 geschaltet, und zwar werden die Signale des Oszillators 72 auf den "Aufwärts"-Eingang des Zählers 74 und die Signale des Oszillators 72B auf den "Abwärts"-Eingang 78 des Zählers 74 geschaltet. Der Zählerstand wird in festen Zeitabständen durch einen Taktimpuls an einem Eingang 80 abgefragt und an einem Ausgang 82 als Digitalzahl ausgegeben. Der Zähler wird anschließend auf null zurückgestellt.

Es werden auf diese Weise die Drehmomente über einen großen Meßbereich hinweg digital ausgegeben und stehen zur digital Datenverarbeitung zur Verfügung. Es brauchen also nicht Analogwerte digitalisiert zu werden.

In gleicher Weise arbeiten die kraftmessenden Geber mit den Kristallsensoren 70A und 70C, den Oszillatoren 72A und 72C und dem Zähler 84. Oszillatoren der vorliegenden Art sind an sich bekannt und beispielsweise in dem Buch von Tietze und Schenk "Halbleiter-Schaltungstechnik" Springer-Verlag, 2. Auflage 1971, Seite 367ff beschrieben. Ein Beispiel eines solchen Oszillators ist in Fig. 6 dargestellt.

Der Oszillator 72 von Fig. 6 betreibt einen Schwingquarz als Kristallsensor 70 in Serienresonanz. Zwei Transistoren 86, 88 bilden einen zweistufigen Verstärker, der über Spannungsteiler 90, 92 bzw. 94, 96 mitgekoppelt ist. Durch Emitterwiderstände 98 bzw. 100 erfolgt eine Stromgegenkopplung, die so stark gemacht ist, daß die Schaltung ohne den Schwingquarz stabil ist. Mit 102 und 104 sind die Kollektorwiderstände bezeichnet.

Bei der Serienresonanzfrequenz des Kristallsensors 70 verbindet der Kristallsensor 70 die beiden Emitter der Transistoren 86, 88 niederohmig miteinander, so daß die Stromgegenkopplung unwirksam wird. Es kommt infolge der dann überwiegenden Mitkopplung eine Schwingung mit der Serienresonanzfrequenz zustande.

## Patentansprüche

1. Drehmomenterzeuger zur Ausübung eines Drehmoments auf einen um eine Drallachse umlaufenden Kreiselrotor mittels stromdurchflossener Spulen, bei welchem

(a) die Spulen (44) ferromagnetische Kerne (46) aufweisen, im wesentlichen axial in bezug auf die Drallachse ausgerichtet und vor einer zur Drallachse im wesentlichen senkrechten, ferromagnetischen Fläche (40) des Kreiselrotors (36) angeordnet sind,

dadurch gekennzeichnet, daß

(b) die Spulen (44) auf kraftmessenden Gebern (48) abgestützt sind, die von den auf die Spulen (44) wirkenden Reaktionskräften beaufschlagt sind und aus deren Signalen ein dem wirksamen Drehmoment proportionales Drehmomentsignal erzeugbar ist.

2. Drehmomenterzeuger nach Anspruch 1, dadurch gekennzeichnet, daß die kraftmessenden Geber (48) piezoelektrische Elemente, z.B. Schwingquarze, enthalten, die von den Reaktionskräften beaufschlagt und in einer Oszillatorschaltung angeordnet sind, die als das besagte Drehmomentsignal eine dem wirksamen Drehmoment analoge Frequenz liefert.

3. Drehmomenterzeuger nach Anspruch 2, gekennzeichnet durch

(a) zwei um 90° gegeneinander winkelversetzte Paare piezoelektrischen Elementen (70, 70B und 70A, 70C), die je in einer Oszillatorschaltung (72, 72B bzw. 72A, 72C) angeordnet sind,

(b) einen ersten und einen zweiten auf und abwärtszählenden Zähler (74, 84) mit je einem "Aufwärts"-Eingang (76) und einem "Abwärts"-Eingang (78), wobei jeder Zähler einem der Paare von Oszillatoren zugeordnet ist,

(c) Mittel zum Verbinden je eines Oszillators (72, 72A) jedes Paares mit dem "Aufwärts"-Eingang (76) des zugeordneten Zählers (74 bzw. 84) und

(d) Mittel zum Verbinden des anderen Oszillators (72B, 72C) jedes Paares mit dem "Abwärts"-Eingang (78) des zugeordneten Zählers (74 bzw. 84)

4. Drehmomenterzeuger nach Anspruch 1, dadurch gekennzeichnet, daß die Spulen (44) von einem Abgriffsignal beaufschlagt sind, welches von der Auslenkung des Kreiselrotors (36) aus einer Mittellage relativ zu dem Gehäuse (10) abhängt, derart, daß durch den Drehmomenterzeuger (42) ein der Auslenkung entgegenwirkendes Drehmoment auf den Kreiselrotor (36) ausübbar ist.

5. Drehmomenterzeuger nach Anspruch 3, dadurch gekennzeichnet, daß

(a) zwei um 180° um die Drallachse winkelversetzte, gegensinnig von einem Gleichstromsignal ansteuerbare Paare von Spulen (44) vorgesehen sind, und

(b) die Spulen (44) gleichzeitig von einer Wechselspannung beaufschlagt und so zusammengeschaltet sind, daß an der Schaltung ein von der Auslenkung des Kreiselrotors (36) abhängiges, resultierendes Abgriffsignal abgreifbar ist.

6. Elektrisch gefesselter, auf Drehgeschwindigkeit ansprechender Kreisel enthaltend

(a) einen um eine Drallachse angetriebenen Kreiselrotor (36), der mechanisch um zwei zu seiner Drallachse und zueinander senkrechte Achsen frei beweglich in einem Gehäuse (10) gelagert ist,

(b) einen Abgriff, der auf Auslenkungen des Kreiselrotors (36) aus einer Mittellage relativ zu dem Gehäuse (10) anspricht und ein Abgriffsignal liefert, und

(c) einen Drehmomenterzeuger (42) mit Spulen (44), der von dem Abgriffsignal gesteuert ist und durch den ein der Auslenkung entgegenwirkendes Drehmoment auf den Kreiselrotor (36) ausübbar ist,

dadurch gekennzeichnet, daß der Drehmomenterzeuger nach Anspruch 1 ausgebildet ist.

7. Kreisel nach Anspruch 6, dadurch gekennzeichnet, daß

(a) zwei um je eine von zwei zueinander und zur Drallachse senkrechten Eingangsachsen wirksame Drehmomenterzeuger (42) vorgesehen sind, von denen jeder aus zwei um 180° um die Drallachse winkelversetzten, gegeninnig von einem Gleichstromsignal ansteuerbaren Spulen (44) gebildet ist,

(b) jedes Paar von Spulen (44) gleichzeitig von einer Wechselspannung beaufschlagt ist und die Spulen (44) so zusammengeschaltet sind, daß der Schaltung ein von der Auslenkung des Kreiselrotors (36) abhängiges, resultierendes Abgriffsignal abgreifbar ist und

(c) jedes von einem Paar von Spulen (44) abgegriffenes Abgriffsignal ein Gleichstromsignal erzeugt, das auf das andere Paar von Spulen (44) aufgeschaltet ist.

8. Kreisel nach Anspruch 6, dadurch gekennzeichnet, daß er als trockener, abgestimmter Kreisel ausgebildet ist.

9. Kreisel nach Anspruch 7, dadurch gekennzeichnet, daß die kraftmessenden Geber (48) piezoelektrische Elemente, z.B. Schwingquarze, enthalten, die von den Reaktionskräften beaufschlagt und in einer Oszillatorschaltung angeordnet sind, die als das besagte Drehmomentsignal eine dem wirksamen Drehmoment proportionale Frequenz liefert.

**Revendications**

1. Générateur de couple pour exercer un couple sur un rotor de gyroscope rotatif autour d'un axe de spin, moyennant des bobines parcourues par le courant, dans lequel

(a) les bobines (44) possèdent des noyaux ferromagnétiques (46), qu'elles sont alignées essentiellement axiales relatif à l'axe de spin, et qu'elles sont disposées devant une surface ferromagnétique (40) du rotor de gyroscope (36) qui est essentiellement perpendiculaire sur l'axe de spin, caractérisé par le fait que

(b) les bobines (44) sont supportées sur des capteurs (48) qui mesurent la force et qui sont exposés aux forces de réaction agissant sur les bobines (44), et dont les signaux peuvent donner un signal de couple proportionnel au couple effectif.

2. Générateur de couple selon la revendication 1, caractérisé par le fait que les capteurs (48) mesurant la force contiennent des éléments piézoélectriques, par exemple des cristaux oscillateurs, qui sont exposés aux forces de réaction et qui sont disposées dans un circuit oscillateur qui fournit comme signal de couple, une fréquence analogue au couple effectif.

3. Générateur de couple selon la revendication 2, caractérisé par

(a) deux paires d'éléments piézoélectriques (70, 70B et 70A, 70C) qui sont angulairement décalées l'une relative à l'autre de 90, les éléments piézoélectriques étant disposés dans un circuit d'oscillation 72, 72B et 72A, 72C, respectivement) chacun,

(b) un premier et un second compteur bidirectionnel (74, 84) ayant une entrée "ascendante"(76) et une entrée "déscendante" (78) chacun, chaque compteur étant associé à l'une des paires d'oscillateurs,

(c) des moyens déstinés à relier un oscillateur (72, 72A) à la fois de chaque paire à l'entrée "ascendante" (76) du compteur associé (74 et 84, respectivement), et

(d) des moyens déstinés à relier l'autre oscillateur (72B, 72C) de chaque paire à l'entrée "déscendante" (78) du compteur associé (74 et 84, respectivement).

4. Générateur de couple selon la revendication 1, caractérisé par le fait que les bobines (44) sont exposées à un signal de capteur qui dépend de la déviation du rotor de gyroscope (36) d'une position central relatif au boitier (10), de sorte qu'un couple s'opposant à la déviation peut etre exercé par le générateur de couple (42) sur le rotor de gyroscope (36).

5. Générateur de couple selon la revendication 3, caractérisé par le fait que

(a) l'on a prévu deux paires de bobines (44) qui sont angulairement décalées de 180 autour de l'axe de spin, et qui peuvent etre commandées en sens inverse par un signal de courant continu, et

(b) les bobines (44) sont simultanément exposées à une tension alternative et elles sont interconnectées de sorte qu'un signal de capteur résultant qui dépend de la déviation du rotor de gyroscope (36), peut etre capté au circuit.

6. Gyroscope électriquement réstreint et répondant à la vitesse de rotation, comprenant

(a) un rotor de gyroscope (36) commandé autour de l'axe de spin, et mécaniquement monté, librement mobile dans un boitier (10), autour de deux axes perpendiculaires sur son axe de spin et l'un sur l'autre,

(b) un capteur qui répond aux déviations du rotor de gyroscope (36) d'une position centrale relatif au boitier (10), et qui fournit un signal de capteur, et

(c) un générateur de couple (42) avec des bobines (44), qui est commandé par le signal de capteur et par lequel un couple s'opposant à la déviation, peut etre exercé sur le rotor de gyroscope (36)

caractérisé par le fait que le générateur de couple est formé selon la revendication 1.

7. Gyroscope selon la revendication 6, caractérisé par le fait que

(a) deux générateurs de couple (42) sont prévus, ces générateurs étant effectifs autour de respectivement l'un des deux axes d'entrée perpendiculaires l'un sur l'autre et sur l'axe de spin, et chacun étant formé par deux bobines (44) qui sont angulairement décalées de 180 autour de l'axe de spin, et qui peuvent etre commandées en sens inverse par un signal de courant continu,

(b) chaque paire de bobines (44) est simultanément exposée à une tension alternative et les bobines (44) sont interconnectées de sorte qu'un signal de capteur résultant qui dépend de la déviation du rotor de gyroscope (36), peut etre capté au circuit, et

(c) chaque signal de capteur capté par une paire de bobines (44) engendre un signal de courant continu, qui est appliqué à l'autre paire de bobines (44).

8. Gyroscope selon la revendication 6, caractérisé par le fait qu'il est formé comme gyroscope sec accordé.

9. Gyroscope selon la revendication 7, caractérisé par le fait que les capteurs (48) mesurant la force contiennent des éléments piézoélectriques, par exemple des cristaux oscillateurs, qui sont exposés aux forces de réaction et qui sont disposés dans un circuit oscillateur qui fournit comme ledit signal de couple, une fréquence proportionnelle au couple effectif.

**Claims**

1. Torquer for exerting a torque by means of current carrying coils on a gyro rotor rotating about a spin axis, in which

(a) the coils (44) have ferromagnetic cores (46), are aligned substantially axially with reference to the spin axis and are arranged in front of a ferromagnetic surface (40) of the gyro rotor (36) substantially perpendicular to the spin axis,
  characterized in that

(b) the coils (44) are supported on force measuring sensors (48) which are subjected to the forces of reaction acting on the coils (44) and the signals of which are adapted to generate a torque signal which is proportional to the acting torque.

2. Torquer as set forth in claim 1, characterized in that the force-measuring sensors (48) comprise piezoelectric elements, e.g. oscillator crystals, which are subjected to the forces of reaction and which are arranged in an oscillatory circuit which supplies, as said torque signal, a frequency analog to the acting torque.

3. Torquer as set forth in claim 2, characterized by

(a) two pairs of piezoelectric elements (70, 70B, 70A, 70C) and mutually angularly offset by 90°, which elements are arranged in an oscillatory circuit (72, 72B and 72A, 72C, respectively) each,

(b) a first and a second bidirectional counter (74, 84) having each an "up"-input (76) and a "down"-input (78), with each counter being associated with one of the pairs of oscillators,

(c) means for connecting one oscillator (72, 72A) of each pair to the "up"-input (76) of the associated counter (74 and 84, respectively), and

(d) means for connecting the other oscillator (72B, 72C) of each pair to the "down"-input (78) of the associated counter (74 and 84, respectively).

4. Torquer as set forth in claim 1, characterized in that a pick-off signal is applied to the coils (44) and is a function of the deflection of the gyro rotor (36) from a central position relative to the housing (10) such that the torquer (42) is adapted to exert a torque on the gyro rotor (36) counteracting the deflection.

5. Torquer as set forth in claim 3, characterized in that

(a) two pairs of coils (44) are provided which are angularly offset by 180° about the spin axis and arranged to be energized oppositely by direct current signals, and

(b) an alternating current simultaneously is applied to the coils (44) and the coils (44) are interconnected such that a resulting pick off signal depending on the deflection of the gyro rotor (36) is adapted to be picked-off at the circuit.

6. Electrically restrained gyro responding to angular rate and comprising

(a) a gyro rotor (36) driven about a spin axis and which is mounted in a housing (10) mechanically freely movable about two axes which are perpendicular to its spin axis and to each other,

(b) a pick-off which responds to deflections of the gyro rotor (36) from a central position relative to the housing (10) and supplies a pick-off signal, and

(c) a torquer (42) having coils (44) and which is controlled by the pick-off signal and adapted to exert a torque on the gyro rotor (36) conteracting the deflection,
  characterized in that the torquer is formed according to claim 1.

7. Gyro as set forth in claim 6, characterized in that

(a) two torquers (42) are provided which are active about one each of two input axes perpendicular to each other and to the spin axis, of which torquers (42) each is formed of two coils (44) which are angularly offset by 180° about the spin axis and arranged to be energized oppositely by direct current signals, and

(b) an alternating current simultaneously is applied to each pair of coils (44) and the coils (44) are interconnected such that a resulting pick-off signal depending on the deflection of the gyro rotor (36) is picked off from the circuit, and

(c) each pick-off signal picked-off from one pair of coils (44) generates a direct current signal which is applied to the other pair of coils (44).

8. Gyro as set forth in claim 6, characterized in that it is formed as dry tuned gyro.

Gyro as set forth in claim 7, characterized in that the sensors (48) measuring the force comprise piezoelectric elements, e.g. oscillator crystals, which are subjected to the forces of reaction and which are arranged in an oscillatory circuit which supplies, as said torque signal, a frequency proportional to the acting torque.

Fig.1

EP 0 146 850 B1

Fig.6

Fig.2

2

Fig.3

Fig.4

Fig.5